# FASCICULE DE BREVET EUROPEEN

(11) **EP 3 901 794 B1**
(45) Date de publication et mention de la délivrance du brevet: **25.09.2024**
(21) Numéro de dépôt: 21169400.5
(22) Date de dépôt: 20.04.2021
(51) Int. Cl.: G06F 21/32, H04L 9/40

(54) **PROCÉDÉ D'AUTHENTIFICATION OU D'IDENTIFICATION D'UN INDIVIDU**
VERFAHREN ZUR AUTHENTIFIZIERUNG ODER IDENTIFIZIERUNG EINER PERSON
METHOD FOR AUTHENTICATION AND IDENTIFICATION OF AN INDIVIDUAL

(30) Priorité: 24.04.2020 FR 2004116
(43) Date de publication de la demande: 27.10.2021
(73) Titulaire: Idemia Identity & Security France, 92400 Courbevoie (FR)
(72) Inventeur: GANDARA, Renaud, 92400 COURBEVOIE (FR); GUILLEMOT, Florence, 92400 COURBEVOIE (FR); SEVAT, Damien, 92400 COURBEVOIE (FR); DESPIEGEL, Vincent, 92400 COURBEVOIE (FR)
(74) Mandataire: Idemia

(56) Documents cités:
- CN-A- 110 909 634
- US-A1- 2014 002 239
- US-A1- 2016 162 673
- US-A1- 2019 080 431

## Description

### DOMAINE TECHNIQUE GENERAL

La présente invention concerne le domaine de l'authentification et l'identification biométrique, en particulier par reconnaissance de visage ou d'iris.

### ETAT DE L'ART

On connait des terminaux de contrôle d'accès biométrique, en particulier basés sur de la reconnaissance optique : un utilisateur autorisé place un trait biométrique (son visage, son iris, etc.), devant le terminal, ce dernier est reconnu, et un portail par exemple est déverrouillé.

Généralement, ce type de terminal est équipé d'un ou plusieurs capteurs de type caméra 2D ou 3D, à « large champ de vue » ce qui permet au produit d'avoir une bonne ergonomie (l'utilisateur n'a pas besoin de se positionner précisément à un endroit défini), et des sources lumineuses telles que des LED, émettant de la lumière visible ou infrarouge (IR) et/ou des diodes laser. En effet, les caméras ne peuvent fonctionner correctement que si l'éclairage du sujet est correct. Un visage dans la pénombre sera par exemple plus difficile à reconnaître.

Également, on constate que des techniques de « spoofing » (en français « usurpation » ou « mystification ») dans lesquelles un individu essaye de tromper frauduleusement un terminal de contrôle d'accès au moyen d'accessoires tels qu'un masque ou une prothèse sont plus facilement repérables sous éclairage adéquat.

Il est connu de « régler » la caméra et les sources lumineuses pour adapter l'exposition par rapport à une région d'intérêt détectée du champ de vision (plus précisément, l'exposition de toute l'image est modifiée en fonction de la luminosité observée de cette région, en d'autres termes la luminosité de la région est « normalisée », éventuellement au détriment d'autres régions de l'image qui pourront le cas échéant devenir sur- ou sous-exposées), mais on constate que la variété d'installations, d'environnements lumineux, de distances d'utilisation, complexifie fortement cette tâche. De surcroit, d'un moment à l'autre de la journée les conditions lumineuses peuvent complètement changer.

Il serait par conséquent souhaitable de disposer d'une nouvelle solution simple, fiable et efficace d'amélioration des performances des algorithmes d'authentification et d'identification biométrique.

### PRESENTATION DE L'INVENTION

Selon un premier aspect, la présente invention concerne un procédé d'authentification ou d'identification d'un individu, caractérisé en ce qu'il comprend la mise en oeuvre par des moyens de traitement de données d'un terminal des étapes suivantes :
(a) Obtention d'une image visible, d'une image infrarouge et d'une image de profondeur sur chacune desquelles apparait un trait biométrique dudit individu ;
(b) Sélection d'au moins une parmi lesdites images visible, image infrarouge et image de profondeur en fonction des conditions d'éclairement ambiant ;
(c) Détection dudit trait biométrique de l'individu dans chaque image sélectionnée ;
(d) Fusion du ou des traits biométriques détectés ;
(e) Authentification ou identification dudit individu sur la base du résultat de la fusion du ou des traits biométriques détectés.

Selon d'autres caractéristiques avantageuses et non limitatives :
L'étape (a) comprend l'acquisition de ladite image visible à partir de données acquises par des premiers moyens d'acquisition optique du terminal, l'acquisition de ladite image infrarouge à partir de données acquises par des deuxièmes moyens d'acquisition optique du terminal et/ou l'acquisition de ladite image de profondeur à partir de données acquises par des troisièmes moyens d'acquisition optique du terminal.

A l'étape (b) l'image visible est sélectionnée si une valeur d'éclairement lumineux ambiant est supérieure à un premier seuil prédéterminé, et/ou l'image infrarouge est sélectionnée si la valeur d'éclairement lumineux ambiant est inférieure à un deuxième seuil prédéterminé, et/ou l'image de profondeur est sélectionnée si la valeur d'éclairement lumineux ambiant est inférieure à un troisième seuil prédéterminé.

Le troisième seuil prédéterminé d'éclairement lumineux ambiant est sensiblement égal au deuxième seuil prédéterminé d'éclairement lumineux ambiant.

Ledit deuxième seuil prédéterminé d'éclairement lumineux ambiant et/ou ledit troisième seuil prédéterminé d'éclairement lumineux ambiant est(sont) au moins cent fois supérieur(s) au premier seuil prédéterminé.

L'étape (d) comprend en outre la vérification de l'authenticité du ou des traits biométriques détectés en fonction de l'image de profondeur.

L'image visible, l'image infrarouge et l'image de profondeur présentent sensiblement le même point de vue.

Ledit trait biométrique de l'individu est choisi parmi un visage et un iris de l'individu.

L'étape (e) comprend la comparaison du trait biométrique détecté avec des données biométriques de référence stockées sur des moyens de stockage de données.

L'étape (e) comprend la mise en oeuvre d'un contrôle d'accès en fonction du résultat de ladite identification ou authentification biométrique.

Selon un deuxième aspect, la présente invention concerne un terminal comprenant des moyens de traitement de données configurés pour implémenter :
- L'obtention d'une image visible, d'une image infrarouge et d'une image de profondeur sur chacune desquelles apparait un trait biométrique dudit individu ;
- La sélection d'au moins une parmi lesdites images visible, image infrarouge et image de profondeur en fonction des conditions d'éclairement ambiant ;
- La détection dudit trait biométrique de l'individu dans chaque image sélectionnée ;
- La fusion du ou des traits biométriques détectés ;
- L'authentification ou l'identification dudit individu sur la base du résultat de la fusion du ou des traits biométriques détectés.

Selon d'autres caractéristiques avantageuses et non limitatives, le terminal comprend des premiers moyens d'acquisition optique pour l'acquisition de ladite image visible et/ou des deuxièmes moyens d'acquisition optique pour l'acquisition de ladite image infrarouge et/ou des troisièmes moyens d'acquisition optique pour l'acquisition de ladite image de profondeur.

Selon un troisième et un quatrième aspect, l'invention propose un produit programme d'ordinateur comprenant des instructions de code pour l'exécution d'un procédé selon le premier aspect d'authentification ou d'identification d'un individu ; et un moyen de stockage lisible par un équipement informatique sur lequel un produit programme d'ordinateur comprend des instructions de code pour l'exécution d'un procédé selon le premier aspect d'authentification ou d'identification d'un individu.

### PRESENTATION DES FIGURES

D'autres caractéristiques et avantages de la présente invention apparaîtront à la lecture de la description qui va suivre d'un mode de réalisation préférentiel. Cette description sera donnée en référence aux dessins annexés dans lesquels :
La **figure 1** représente de façon générale un terminal pour la mise en oeuvre du procédé d'authentification ou d'identification d'un individu selon l'invention ;
La **figure 2** représente schématiquement les étapes d'un mode de réalisation du procédé d'authentification ou d'identification d'un individu selon l'invention ;
La **figure 3a** représente un premier exemple d'image visible, image infrarouge, image infrarouge structurée et image de profondeur utilisées dans le procédé selon l'invention ;
La **figure 3b** représentent un deuxième exemple d'image visible, image infrarouge, image infrarouge structurée et image de profondeur utilisées dans le procédé selon l'invention.
La **figure 3c** représente un troisième exemple d'image visible, image infrarouge, image infrarouge structurée et image de profondeur utilisées dans le procédé selon l'invention.
La **figure 3d** représente un quatrième exemple d'image visible, image infrarouge, image infrarouge structurée et image de profondeur utilisées dans le procédé selon l'invention.

### DESCRIPTION DETAILLEE

### Architecture

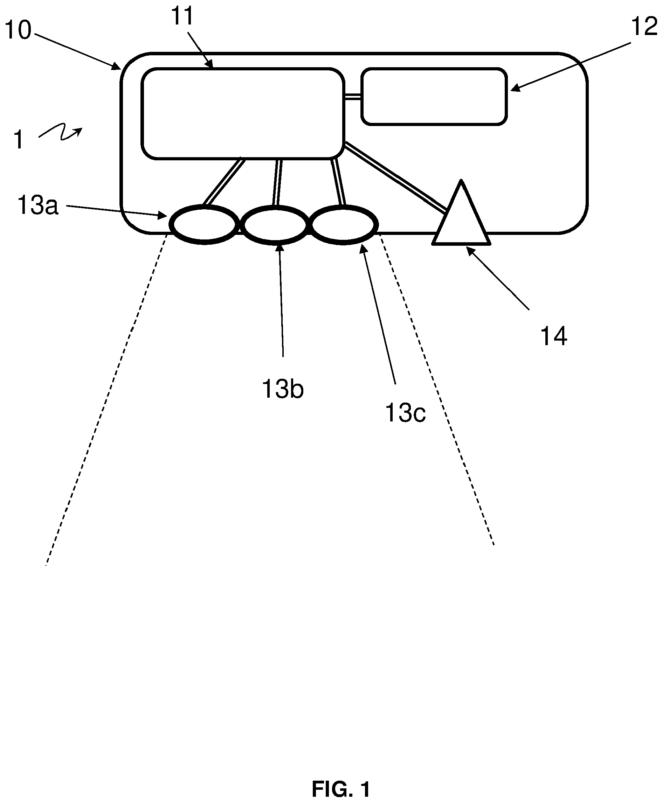

En référence à la **figure 1**, est proposé un terminal 1 pour la mise en oeuvre d'un procédé d'authentification ou d'identification d'un individu, c'est-à-dire déterminer ou vérifier l'identité de l'individu se présentant devant le terminal 1, pour le cas échéant autoriser l'accès à cet individu. Comme on le verra, il s'agit typiquement de biométrie du visage (reconnaissance faciale ou d'iris), dans laquelle l'utilisateur doit approcher son visage, mais également de biométrie d'empreinte (digitale ou palmaire) à distance dans laquelle l'utilisateur approche sa main.

Le terminal 1 est typiquement un équipement détenu et contrôlé par une entité auprès de qui l'authentification/identification doit être effectuée, par exemple une entité gouvernementale, douanière, une entreprise, etc. On comprendra qu'il peut sinon d'agir d'un équipement personnel à un individu, comme par exemple un téléphone mobile ou « smartphone », une tablette électronique, un ordinateur personnel, etc.

Dans la suite de la présente description on prendra l'exemple d'un terminal de contrôle d'accès d'un bâtiment (par exemple celui permettant d'ouvrir un portail - généralement il s'agit d'un terminal monté sur un mur à coté de ce portail), mais on notera que le présent procédé reste utilisable dans de très nombreuses situations, par exemple pour authentifier un individu souhaitant embarquer dans un avion, accéder à des données personnelles ou une application, mettre en oeuvre une transaction, etc.

Le terminal 1 comprend des moyens de traitement de données 11, typiquement de type processeur, gérant le fonctionnement du terminal 1, et contrôlant ses divers composants, le plus souvent dans un boitier 10 protégeant ses divers composants.

De manière préférée, le terminal 1 comprend des premiers moyens d'acquisition optique 13a, des deuxièmes moyens d'acquisition optique 13b et/ou des troisièmes moyens d'acquisition optique 13c, typiquement disposés de sorte à observer un espace généralement situé « devant » le terminal 1 et acquérir un flux de données, en particulier des images d'un trait biométrique tel que le visage ou l'iris d'un individu. Par exemple, dans le cas d'un terminal mural de contrôle d'accès, les moyens d'acquisition optique 13a, 13b, 13c sont disposés à hauteur d'homme de sorte à pouvoir observer le visage des individus s'en approchant. On note qu'il peut tout à fait y avoir d'autres moyens d'acquisition optique 13a, 13b, 13c qui observeraient un autre espace (et qui ne sont pas impliqués dans le fonctionnement biométrique souhaité) : les terminaux mobiles de type smartphone ont généralement à la fois des caméras devant et des caméras derrière. On se focalisera dans la suite de la présente description sur l'espace situé « en regard » des moyens d'acquisition optique 13a, 13b, 13c, c'est-à-dire celui situé « en face » des moyens d'acquisition optique 13a, 13b, 13c, qui est donc observable et dans lequel on souhaite faire l'identification ou de l'authentification biométrique.

Les premiers moyens d'acquisition optique 13a, les deuxièmes moyens d'acquisition optique 13b et les troisièmes moyens d'acquisition optique 13c sont de nature différente, puisque comme l'on verra le présent procédé utilise un premier flux d'images visibles, un deuxième flux d'images infrarouge et un troisième flux d'images de profondeur sur chacune desquelles apparait un trait biométrique dudit individu.

Plus précisément, les premiers et les deuxièmes moyens d'acquisition optique 13a, 13b sont des capteurs permettant l'acquisition d'une image « de radiation », c'est-à-dire une image classique dans laquelle chaque pixel reflète l'apparence réelle de la scène observée, i.e. où chaque pixel présente une valeur correspondant à la quantité de rayonnement électromagnétique reçu dans une partie du spectre électromagnétique donnée.

Les premiers et deuxièmes moyens d'acquisitions 13a, 13b se distinguent cependant sur la partie du spectre électromagnétique dans laquelle ils sont sensibles, en ce que les premiers moyens d'acquisition optique 13a permettent l'acquisition d'une image visible (généralement une image couleur - type RGB - pour laquelle la valeur d'un pixel définit sa couleur, mais également une image en niveaux de gris voire en noir et blanc - pour laquelle la valeur d'un pixel définit sa luminosité), i.e. l'image telle que l'œil humain peut la voir (le spectre électromagnétique concerné est le spectre visible - bande de 380 à 780 nm), alors que les deuxièmes moyens d'acquisition optique 13b permettent l'acquisition d'une image infrarouge (IR - pour lesquelles la valeur d'un pixel définit sa luminosité mais cette fois dans une bande au-delà de 800 nm) voire même « proche » infrarouge (NIR - bande 700 à 2000 nm).

Les troisièmes moyens d'acquisition optique 13c sont des capteurs permettant quant à eux l'acquisition d'une « image de profondeur » ou « carte de profondeur », c'est-à-dire une image dont la valeur des pixels est la distance selon l'axe optique entre le centre optique du capteur et le point observé. Une image de profondeur est parfois représentée (afin d'être visuellement appréhendable), comme une image en niveaux de gris ou de couleur dont la luminance de chaque point est fonction de la valeur de distance (plus un point est près, plus il est clair) mais on comprendra qu'il s'agit d'une image artificielle par opposition aux images de radiation définies ci-avant.

On comprendra que de nombreuses technologies de capteurs permettant l'obtention d'une image de profondeur sont connues (« temps de vol », stéréovision, sonar, lumière structurée, etc.), et que dans la plupart des cas, l'image de profondeur est en pratique reconstruite par les moyens de traitement 11 à partir de données brutes fournies par les troisièmes moyens d'acquisition optique 13c et qu'il faut traiter (on répète qu'une image de profondeur est un objet artificiel qu'un capteur ne peut pas facilement obtenir par une mesure directe). Ainsi, par commodité, on gardera l'expression « acquisition de l'image de profondeur par les troisièmes moyens d'acquisition optique 13c » même si l'homme du métier comprendra que cette acquisition implique généralement les moyens de traitement de données 11.

Dans la suite de la présente description, on prendre ainsi l'exemple d'une image de profondeur obtenue à partir d'une combinaison de stéréovision et d'une image infrarouge éclairée en lumière structurée dite « IR 3D ».

A noter que les premiers, deuxièmes et troisièmes moyens d'acquisition optique 13a, 13b, 13c ne sont pas nécessairement trois capteurs indépendants et peuvent être plus ou moins confondus.

Par exemple ce que l'on appelle communément une « caméra 3D » est souvent un ensemble de deux caméras 2D juxtaposées (formant un couple stéréoscopique). L'une de ces deux caméras peut constituer les premiers ou les deuxièmes moyens d'acquisition optique 13a, 13b, et l'ensemble des deux les troisièmes moyens d'acquisition optique 13c.

Par ailleurs, le trait biométrique à acquérir dudit individu (son visage, son iris, etc.) doit apparaître au moins en partie aussi bien sur les images de radiation que sur l'image de profondeur, de sorte qu'elles doivent pouvoir observer plus ou moins le même espace. De manière préférée, les premiers, deuxièmes et troisièmes moyens d'acquisition optique 13a, 13b, 13c présentent sensiblement le même point de vue, c'est-à-dire qu'ils sont disposés proches, au maximum à quelques dizaines de centimètres d'écart, avantageusement quelques centimètres (dans l'exemple de deux caméras formant un couple stéréoscopique, leur distance est classiquement de l'ordre de 7 cm), avec des axes optiques parallèles ou orientés l'un par rapport à l'autre au maximum de quelques degrés. Ce sera le cas dans les exemples qui seront présentés plus bas, où l'on verra que les points de vue et les orientations coïncident.

Néanmoins, il reste possible d'avoir des capteurs plus espacés, dans la mesure où l'on connait des algorithmes de recalage (connaissant leurs positions et orientations relatives).

Bien entendu, les premiers, deuxièmes et troisièmes moyens d'acquisition optique 13a, 13b, 13c sont synchronisés de sorte à acquérir des données de manière sensiblement simultanée. Les trois images doivent représenter l'individu sensiblement au même moment (i.e. à quelques millisecondes ou dizaines de millisecondes près), même s'il reste tout à fait possible de faire fonctionner ces moyens 13a, 13b, 13c de manière indépendante (voir plus loin).

Par ailleurs, le terminal 1 peut avantageusement comprendre des moyens d'éclairage 14 adaptés pour éclairer ledit espace en regard desdits moyens d'acquisition optique 13a, 13b, 13c (c'est-à-dire qu'ils vont pouvoir éclairer les sujets visibles par les moyens d'acquisition optique 13a, 13b, 13c, ils sont généralement disposés à proximité de ces derniers pour « regarder » dans la même direction). On comprend ainsi que la lumière émise par les moyens d'éclairage 14 est reçue et réémise par le sujet vers le terminal 1, ce qui permet que les moyens d'acquisition optique 13a, 13b, 13c puissent acquérir des données de qualité correcte et augmenter la fiabilité de l'éventuel traitement biométrique subséquent.

Enfin, les moyens de traitement de données 11 sont souvent connectés à des moyens de stockage de données 12 stockant une base de données biométriques de référence, préférentiellement des images de visages (faces) ou d'iris, de sorte à permettre la comparaison d'un trait biométrique de l'individu apparaissant sur l'image visible avec les données biométriques de référence. Les moyens 12 peuvent être ceux d'un serveur distant auquel le terminal 1 est connecté, mais avantageusement il s'agit de moyens 12 locaux, i.e. inclus dans le terminal 1 (en d'autres termes le terminal 1 comprend les moyens de stockage 12), de sorte à éviter tout transfert de données biométriques sur le réseau et limiter des risques d'interception ou de fraude.

### Procédé

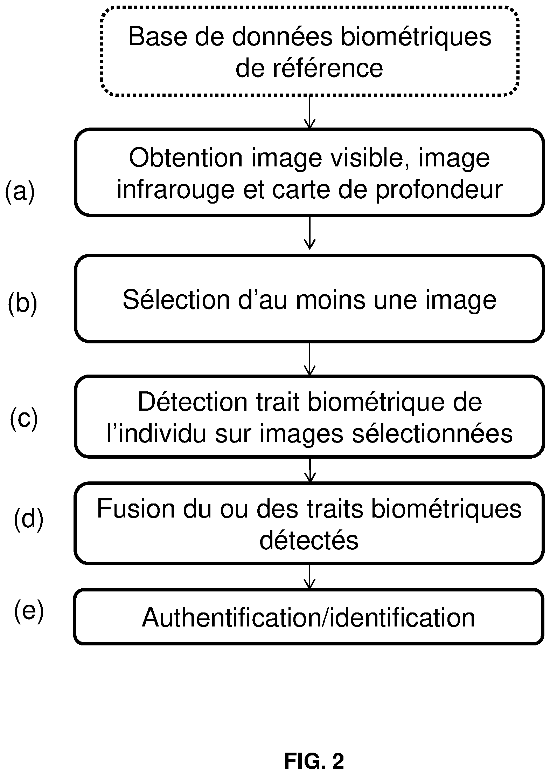

En référence à la **figure 2**, Le présent procédé, mis en oeuvre par les moyens de traitement de données 11 du terminal 1, commence par une étape (a) d'obtention d'une image visible (en pratique un flux d'images visibles dit premier flux par commodité), d'une image infrarouge (en pratique un flux d'images infrarouge dit deuxième flux) et d'une image de profondeur (en pratique un flux de images de profondeur dit troisième flux), sur chacune desquelles apparait un trait biométrique dudit individu. Par « flux » on entend une séquence desdites images au cours du temps, acquises généralement à une fréquence prédéterminée telle que 15 Hz.

Comme expliqué, si le terminal 1 comprend directement les premiers moyens d'acquisition optique 13a, les deuxièmes moyens d'acquisition optique 13b et/ou les troisièmes moyens d'acquisition optique 13c, cette étape peut comprendre l'acquisition de données de la part de ces moyens 13a, 13b, 13c et l'obtention respective de l'image visible à partir des données acquises par les premiers moyens d'acquisition optique 13a, de l'image infrarouge à partir des données acquises par les deuxièmes moyens d'acquisition optique 13b et/ou de l'image de profondeur par les troisièmes moyens d'acquisition optique 13c.

Le procédé n'est cependant par limité à ce mode de réalisation, et lesdites images/cartes pourront être obtenues de manière externe et simplement transmises aux moyens de traitement de données 11 pour analyse.

Dans une étape (b) suivante, le procédé comprend la sélection d'au moins une parmi lesdites images visible, image infrarouge et image de profondeur en fonction des conditions d'éclairement ambiantes.

En effet, comme l'on verra, l'idée astucieuse à la base de la présente invention est de constater que les trois flux ont des robustesses différentes en fonction de ces conditions d'éclairement, et d'en tirer parti. Ainsi, les différentes images vont pouvoir servir d'objets redondants pour garantir une détection optimale quelles que soient les conditions d'éclairement.

Par « conditions d'éclairement ambiant », on entend les conditions d'éclairement de l'environnement, indépendamment de l'impact des moyens d'éclairage 14, i.e. les conditions subies par le terminal. Ces conditions d'éclairement ambiant sont exprimées sous la forme d'une valeur d'éclairement lumineux en lux, et dépendent du soleil (heure de la journée, temps), des ouvertures de la pièce dans la pièce dans laquelle le terminal 1 est installé (volets/rideaux), des luminaires présents dans cette pièce, etc.

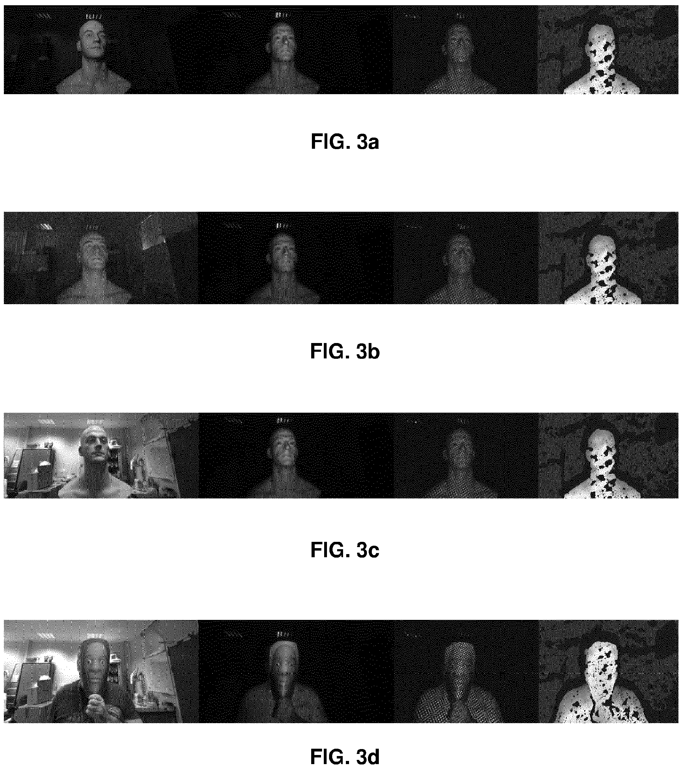

Les **figure 3a, figure 3b et figure 3c** montrent en ainsi, dans trois conditions d'éclairement très différentes, de gauche à droite l'image visible, puis l'image infrarouge, l'image infrarouge éclairée en lumière structurée, et enfin l'image de profondeur (obtenue entre autres à partir de l'image infrarouge éclairée en lumière structurée) :
- dans la **figure 3a****,** on considère un cas de conditions « normales » d'éclairement, à savoir éclairement lumineux moyen. On voit que toutes les images sont de bonne qualité.
- dans la **figure 3b****,** on considère un premier cas de conditions « extrêmes » d'éclairement, à savoir éclairement lumineux très faible (moins de 25 lux). On voit que l'image visible est très bruitée (car il fait augmenter le gain, et temps d'exposition est poussé).
- dans la **figure 3c****,** on considère un deuxième cas de conditions « extrêmes » d'éclairement, à savoir éclairement lumineux très fort (plus de 25000 lux). On voit cette fois un début de saturation en infrarouge et une perte de la lumière structurée conditionnant la qualité de la 3D et donc de l'image de profondeur.

A noter que de façon générale, quelle que soit la technologie d'acquisition les images de profondeur perdent en qualité à forte luminosité.

On peut ainsi définir un premier, un deuxième et/ou un troisième seuil prédéterminé d'éclairement lumineux ambiant, tels que :
- l'image visible est sélectionnée si (préférentiellement seulement si) une valeur d'éclairement lumineux ambiant est supérieure à un premier seuil prédéterminé (puisque l'image visible est de bonne qualité à luminosité moyenne ou forte), et/ou
- l'image infrarouge est sélectionnée si (préférentiellement seulement si) la valeur d'éclairement lumineux ambiant est inférieure à un deuxième seuil prédéterminé (puisque l'image infrarouge est de bonne qualité à luminosité moyenne ou faible), et/ou
- l'image de profondeur est sélectionnée si (préférentiellement seulement si) la valeur d'éclairement lumineux ambiant est inférieure à un troisième seuil prédéterminé (puisque l'image de profondeur est de bonne qualité à luminosité moyenne ou faible).

Avantageusement, les trois conditions sont appliquées, même si on pourrait par exemple n'utiliser que les premiers et deuxièmes seuils, i.e. sélectionner l'image de profondeur tout le temps).

Le deuxième seuil et/ou le troisième seuil sont préférentiellement choisis supérieurs voire très supérieurs (au moins 100 fois voire 1000 fois plus) au premier seuil, de sorte à définir au moins trois plages d'éclairement lumineux :
- une plage basse, inférieure au premier seuil, dans laquelle seules les images infrarouge et de profondeur sont sélectionnées ;
- une plage intermédiaire, supérieure au premier seuil et inférieure à chacun des deuxième et troisième seuils, dans laquelle toutes les images sont sélectionnées ;
- une plage haute, supérieure à chacun des deuxième et troisième seuil, dans laquelle seule l'image visible est sélectionnée.

A noter que préférentiellement les deuxièmes et troisième seuils coïncident, mais il pourrait y avoir une différence, ce qui autoriserait l'existence d'une plage entre la plage intermédiaire et la plage haute dans laquelle seule l'image visible et une de l'image infrarouge et de l'image de profondeur serait sélectionnée.

En termes de valeurs, on peut choisir pour le premier seuil par exemple moins de 250 lux, voire moins de 100 lux, voire moins de 50 lux, voire 25 lux, et pour les deuxième et/ou troisième seuils par exemple plus de 2500 lux, voire plus de 5000 lux, voire plus de 10000 lux, voire 25000 lux, mais on ne sera limité à aucune valeur et tout dépendra de l'environnement du terminal 1.

A noter qu'on ne sera limitée à aucune fonction de sélection des images, la comparaison avec un seuil n'étant qu'une possibilité parmi d'autres.

### Détection

On connait déjà des procédés dans lesquels une image visible, une image infrarouge et une image de profondeur sont utilisées, comme par exemple décrit dans le document 3D Multi-Spectrum Sensor System with Face Recognition, Joongrock Kim, Sunjin Yu, Ig-Jae Kim, and Sangyoun Lee*.*

Cependant, l'idée est toujours de « combiner » les images, notamment en créant un objet multispectral et/ou en reconstruisant un modèle 3D.

On comprend que non seulement on ne tire pas partie du fait que les trois flux ont des robustesses différentes en fonction de ces conditions d'éclairement, mais au contraire on ne peut avoir un traitement de qualité que lorsque les conditions d'éclairement sont optimales pour toutes les images, c'est-à-dire dans une bande assez faible.

Au contraire, le présent procédé propose dans une étape (c) de détecter ledit trait biométrique de l'individu dans chaque image sélectionnée, et ce de manière indépendante.

En d'autres termes, on peut mettre en oeuvre jusqu'à 3 détections, et du fait de la sélection préalable il est garanti que chaque détection est de bonne qualité.

On pourra choisir toute technique de détection connue de l'homme du métier, et notamment utiliser un réseau de neurones à convolution, CNN, de détection/classification.

L'étape (c) peut comprendre l'identification préalable dans chaque image (et préférentiellement l'image de profondeur) d'une région d'intérêt susceptible de contenir ledit trait biométrique. Par région d'intérêt on entend une (ou plusieurs, la région d'intérêt n'est pas forcément un ensemble continu) zone spatiale sémantiquement plus intéressante et sur laquelle on estime qu'on va trouver le trait biométrique recherché (et pas à l'extérieur de cette région d'intérêt).

Ainsi, il est bien connu de tenter d'identifier une région d'intérêt directement dans une image de radiation, mais il est bien plus facile de le faire dans l'image de profondeur si elle a été sélectionnée :
- celle-ci n'est que peu affectée par l'exposition (l'image de profondeur ne comprend aucune information dépendant de la luminosité) ;
- est très discriminante car elle permet de séparer sans difficulté les objets distincts et notamment ceux du premier plan par rapport à ceux du second plan.

Pour cela, ladite région d'intérêt est avantageusement identifiée comme l'ensemble des pixels de ladite image de profondeur associés à une valeur de profondeur comprise dans une gamme prédéterminée, avantageusement les pixels les plus proches. Il s'agit d'un simple seuillage de l'image de profondeur, permettant de filtrer les objets à la distance souhaitée du terminal 1, éventuellement couplé à un algorithme permettant d'agréger des pixels en objets ou blobs (pour éviter d'avoir plusieurs régions d'intérêt distinctes correspondant par exemple à plusieurs visages à la même distance ou non).

De manière préférée, on prendra par exemple la gamme [0 ; 2m] voire [0 ; 1m] dans le cas d'un terminal 1 mural, mais selon les cas d'application on pourra faire varier cette gamme (par exemple dans le cas d'un terminal personnel de type smartphone, on pourra se limiter à 50 cm).

Alternativement en complément, on peut mettre en oeuvre un algorithme de détection/classification (par exemple via un réseau de neurones à convolution, CNN) sur les images pour identifier ladite région d'intérêt susceptible de contenir ledit trait biométrique, par exemple la silhouette humaine la plus proche.

Dans tous les cas, on peut obtenir un ou plusieurs masques définissant une ou plusieurs zones d'intérêt sur l'une ou l'autre des images, qu'on peut appliquer sur les autres images sélectionnées de sorte à réduire la surface de détection.

De manière classique, l'étape (c) peut également comprendre l'adaptation de l'exposition de chaque image sélectionnée par rapport à la région d'intérêt identifiée. Pour cela, comme expliqué on normalise l'exposition de toute l'image par rapport à celle de la zone considérée : ainsi, on est sûr que les pixels de la région d'intérêt sont exposés de manière optimale, le cas échéant au détriment du reste de l'image, mais cela est sans importance puisqu'on a renoncé à l'information dans ce reste de l'image visible.

Ainsi :
- on réduit le temps et la complexité de l'algorithme de détection puisque seulement une fraction des images a besoin d'être analysée ;
- on élimine les risques de fausses détections sur la partie non sélectionnée (fréquentes si l'on utilise un CNN de détection) ;
- on est sûr que les conditions de détection sont optimales dans la région d'intérêt et donc que les performances de détection y sont optimales.

### Fusion

Ensuite, dans une étape (d), est mise en oeuvre une fusion du ou des traits biométriques détectés, i.e. la mise en concordance des divers résultats de détection sur l'une ou l'autre des images, généralement signalant le trait biométrique potentiel sous la forme d'une « boite » de détection, par exemple un rectangle entourant un visage.

En effet, dans la mesure où l'on a plusieurs images sur lesquelles la détection a été mise en oeuvre de manière indépendante, il est possible qu'un même trait ait été détecté sur les différentes images, ou au contraire des traits différents.

Il est même tout à fait possible à ce stade que plusieurs traits biométriques « candidats » soient détectés dans une même image visible, infrarouge ou de profondeur.

L'objectif de la fusion est « d'agréger » les flux d'une part en collectant tous les traits biométriques candidats (i.e. détectés sur au moins une image), tout en repérant les « meilleurs » candidats (ceux détectés sur plusieurs images, et présentant certaines caractéristiques supplémentaires comme un bon positionnement vis-à-vis des caméras, une bonne distance, etc.).

Suivant le nombre d'images sélectionnées, ladite fusion est avantageusement d'abord mise en oeuvre entre les flux 2D (i.e. l'image visible et l'image infrarouge) et enduite avec le flux 3D (l'image de profondeur).

Pour cela, les premiers, deuxièmes et troisièmes moyens d'acquisition optique 13a, 13b, 13c sont préférentiellement synchronisés de sorte à acquérir des données de manière sensiblement simultanée. L'image visible et l'image de profondeur doivent représenter l'individu sensiblement au même moment (à quelques millisecondes ou dizaines de millisecondes près), même s'il reste tout à fait possible de faire fonctionner ces moyens 13a, 13b, 13c de manière tout à fait indépendante (voir plus loin).

La fusion des détections peut se faire en comparant directement les coordonnées des traits détectées, en particulier si les trois images présentent sensiblement le même point de vue et la même direction.

Alternativement, on transpose les coordonnées des pixels d'une détection d'une image à l'autre en tenant compte des positions et orientations des caméras, de manière connue pour l'homme du métier. Par exemple, cela peut se faire par apprentissage des caractéristiques des systèmes de caméras de manière automatique (paramètres intrinsèques à la caméra comme la focale et la distorsion, et paramètres extrinsèques comme la position et l'orientation). Cet apprentissage réalisé une fois pour toutes permet alors de réaliser la « projection » (le recalage) par calculs lors du traitement des images.

Dans le cas où une seule image serait sélectionnée, on comprend que la fusion est triviale : on garde le ou les traits biométriques détectés sur cette image, même si la sélection d'un ou plusieurs meilleur candidat peut toujours avoir lieu.

En ce qui concerne la sélection de « meilleurs candidats » de détection, de nombreuses techniques sont connues de l'homme du métier, et on pourra par exemple classer les détections suivant divers critères, ou bien utiliser des algorithmes de tracking pour voir si ces détections perdurent, etc.

De manière préférée, l'étape (d) comprend en outre la vérification de l'authenticité du trait biométrique détecté en fonction de l'image de profondeur.

L'idée est de mettre en oeuvre de l'anti-spoofing sur tout ou partie des traits biométriques détectés, en particulier après fusion, en se basant sur l'image de profondeur.

En effet, le spoofing concerne principalement des masques plats ou semi-plats qui peuvent tromper les algorithmes de détection sur image visible ou infrarouge, mais qui sont facilement repérables sur l'image de profondeur, comme on voit notamment dans l'exemple de la **[****Fig. 3d****]**.

### Identification et authentification

Enfin, dans une étape (e), est mise en oeuvre l'authentification ou l'identification à proprement parler dudit individu sur la base du résultat de la fusion du ou des traits biométriques détectés, par exemple sur la base du meilleur candidat de trait biométrique de chaque image.

Plus précisément, on considère comme expliqué ledit trait biométrique détecté comme une donnée biométrique candidate, et il est comparé avec une ou plusieurs données biométriques de référence de la base de données des moyens de stockage de données 12.

Il suffit alors de vérifier que cette donnée biométrique candidate coïncide avec la/une donnée biométrique de référence. De façon connue, la donnée biométrique candidate et la donnée biométrique de référence coïncident si leur distance selon une fonction de comparaison donnée est inférieure à un seuil prédéterm iné.

Dans le cas où un trait biométrique candidat est retrouvé dans plusieurs images sélectionnées, on effectue cette comparaison autant de fois qu'il y a d'images sélectionnées. En effet, on peut disposer d'autant de bases de données biométriques de référence qu'il y a de types de flux (visible, infrarouge, de profondeur), et pour que l'identification/authentification soit confirmée, elle doit l'être pour chaque image sélectionnée.

Ainsi, la mise en oeuvre de la comparaison comprend typiquement le calcul d'une distance entre les données, dont la définition varie en fonction de la nature des données biométriques considérées. Le calcul de la distance comprend le calcul d'un polynôme entre les composantes des données biométriques, et avantageusement le calcul d'un produit scalaire.

Par exemple, dans le cas où les données biométriques ont été obtenues à partir d'images d'iris, une distance classiquement utilisée pour comparer deux données est la distance de Hamming. Dans le cas où les données biométriques ont été obtenues à partir d'images du visage d'individu, il est courant d'utiliser la distance euclidienne.

Ce type de comparaison est connu de l'Homme du Métier et ne sera pas décrit plus en détails ci-avant.

L'individu est authentifié/identifié si la comparaison révèle un taux de similarité entre la donnée candidate et la/une donnée de référence excédant un certain seuil, dont la définition dépend de la distance calculée, et ce pour chaque image.

### Terminal

Selon un deuxième aspect, la présente invention concerne le terminal 1 pour la mise en oeuvre du procédé selon le premier aspect.

Le terminal 1 comprend des moyens de traitement de données 11, de type processeur, avantageusement des premiers moyens d'acquisition optique 13a (pour l'acquisition d'une image visible) et/ou des deuxièmes moyens d'acquisition optique 13b (pour l'acquisition d'une image infrarouge) et/ou des troisièmes moyens d'acquisition optique 13c (pour l'acquisition d'une image de profondeur), et le cas échéant des moyens de stockage de données 12 stockant une base de données biométriques de référence.

Les moyens de traitement de données 11 sont configurés pour implémenter :
- L'obtention d'une image visible, d'une image infrarouge et d'une image de profondeur sur chacune desquelles apparait un trait biométrique dudit individu ;
- La sélection d'au moins une parmi lesdites images visible, image infrarouge et image de profondeur en fonction des conditions d'éclairement ambiant ;
- La détection dudit trait biométrique de l'individu dans chaque image sélectionnée ;
- La fusion du ou des traits biométriques détectés ;
- L'authentification ou l'identification dudit individu sur la base du résultat de la fusion du ou des traits biométriques détectés.

Selon un troisième et un quatrième aspects, l'invention concerne un produit programme d'ordinateur comprenant des instructions de code pour l'exécution (en particulier sur les moyens de traitement de données 11 du terminal 1) d'un procédé selon le premier aspect de l'invention d'authentification ou d'identification d'un individu, ainsi que des moyens de stockage lisibles par un équipement informatique (une mémoire 12 du terminal 2) sur lequel on trouve ce produit programme d'ordinateur.

## Revendications

1. Procédé d'authentification ou d'identification d'un individu, **caractérisé en ce qu'**il comprend la mise en oeuvre par des moyens de traitement de données (11) d'un terminal (1) des étapes suivantes :
(a) Obtention d'une image visible, d'une image infrarouge et d'une image de profondeur sur chacune desquelles apparait un trait biométrique dudit individu ;
(b) Sélection d'au moins une parmi lesdites images visible, image infrarouge et image de profondeur en fonction des conditions d'éclairement ambiant ;
(c) Détection dudit trait biométrique de l'individu dans chaque image sélectionnée ;
(d) Fusion du ou des traits biométriques détectés ;
(e) Authentification ou identification dudit individu sur la base du résultat de la fusion du ou des traits biométriques détectés.

2. Procédé selon la revendication 1, dans lequel l'étape (a) comprend l'acquisition de ladite image visible à partir de données acquises par des premiers moyens d'acquisition optique (13a) du terminal (1), l'acquisition de ladite image infrarouge à partir de données acquises par des deuxièmes moyens d'acquisition optique (13b) du terminal (1) et/ou l'acquisition de ladite image de profondeur à partir de données acquises par des troisièmes moyens d'acquisition optique (13c) du terminal (1).

3. Procédé selon l'une des revendications 1 et 2, dans lequel à l'étape (b) l'image visible est sélectionnée si une valeur d'éclairement lumineux ambiant est supérieure à un premier seuil prédéterminé, et/ou l'image infrarouge est sélectionnée si la valeur d'éclairement lumineux ambiant est inférieure à un deuxième seuil prédéterminé, et/ou l'image de profondeur est sélectionnée si la valeur d'éclairement lumineux ambiant est inférieure à un troisième seuil prédéterminé.

4. Procédé selon la revendication 3, dans lequel à l'étape (b) l'image visible est sélectionnée seulement si une valeur d'éclairement lumineux ambiant est supérieure au premier seuil prédéterminé, l'image infrarouge est sélectionnée seulement si la valeur d'éclairement lumineux ambiant est inférieure au deuxième seuil prédéterminé, et l'image de profondeur est sélectionnée seulement si la valeur d'éclairement lumineux ambiant est inférieure au troisième seuil prédéterminé.

5. Procédé selon l'une des revendications 3 et 4, dans lequel le troisième seuil prédéterminé d'éclairement lumineux ambiant est sensiblement égal au deuxième seuil prédéterminé d'éclairement lumineux ambiant.

6. Procédé selon l'une des revendications 3 à 5, dans lequel ledit deuxième seuil prédéterminé d'éclairement lumineux ambiant et/ou ledit troisième seuil prédéterminé d'éclairement lumineux ambiant est(sont) au moins cent fois supérieur(s) au premier seuil prédéterminé.

7. Procédé selon l'une des revendications 1 à 6, dans lequel l'étape (d) comprend en outre la vérification de l'authenticité du ou des trait biométrique détecté en fonction de l'image de profondeur.

8. Procédé selon l'une des revendications 1 à 7, dans lequel l'image visible, l'image infrarouge et l'image de profondeur présentent sensiblement le même point de vue.

9. Procédé selon l'une des revendications 1 à 8, dans lequel ledit trait biométrique de l'individu est choisi parmi un visage et un iris de l'individu.

10. Procédé selon l'une des revendications 1 à 9, dans lequel l'étape (e) comprend la comparaison du trait biométrique détecté avec des données biométriques de référence stockées sur des moyens de stockage de données (12).

11. Procédé selon l'une des revendications 1 à 10, dans lequel l'étape (e) comprend la mise en oeuvre d'un contrôle d'accès en fonction du résultat de ladite identification ou authentification biométrique.

12. Terminal (1) comprenant des moyens de traitement de données (11) configurés pour implémenter :
• (a) L'obtention d'une image visible, d'une image infrarouge et d'une image de profondeur sur chacune desquelles apparait un trait biométrique dudit individu ;
• (b) La sélection d'au moins une parmi lesdites images visible, image infrarouge et image de profondeur en fonction des conditions d'éclairement ambiant ;
• (c) La détection dudit trait biométrique de l'individu dans chaque image sélectionnée ;
• (d) La fusion du ou des traits biométriques détectés ;
• (e) L'authentification ou l'identification dudit individu sur la base du résultat de la fusion du ou des traits biométriques détectés.

13. Terminal selon la revendication 12, comprend des premiers moyens d'acquisition optique (13a) pour l'acquisition de ladite image visible et/ou des deuxièmes moyens d'acquisition optique (13b) pour l'acquisition de ladite image infrarouge et/ou des troisièmes moyens d'acquisition optique (13c) pour l'acquisition de ladite image de profondeur.

14. Produit programme d'ordinateur comprenant des instructions de code pour l'exécution d'un procédé selon l'une des revendications 1 à 11 d'authentification ou d'identification d'un individu, lorsque ledit procédé est exécuté sur un ordinateur.

15. Moyen de stockage lisible par un équipement informatique sur lequel un produit programme d'ordinateur comprend des instructions de code pour l'exécution d'un procédé selon l'une des revendications 1 à 11 d'authentification ou d'identification d'un individu.

## Patentansprüche

1. Verfahren zur Authentifizierung oder Identifizierung einer Person, **dadurch gekennzeichnet, dass** es die Durchführung der folgenden Schritte durch Datenverarbeitungseinrichtungen (11) eines Endgeräts (1) enthält:
(a) Erhalt eines sichtbaren Bilds, eines Infrarotbilds und eines Tiefenbilds, auf jedem von denen ein biometrisches Merkmal der Person erscheint;
(b) Auswahl von mindestens einem von den sichtbaren, Infrarot- und Tiefenbildern abhängig von den Umgebungsbeleuchtungsstärkebedingungen;
(c) Erkennung des biometrischen Merkmals der Person in jedem ausgewählten Bild;
(d) Fusion des oder der erkannten biometrischen Merkmale;
(e) Authentifizierung oder Identifizierung der Person auf der Basis des Ergebnisses der Fusion des oder der erkannten biometrischen Merkmale.

2. Verfahren nach Anspruch 1, wobei der Schritt (a) die Erfassung des sichtbaren Bilds ausgehend von von ersten optischen Erfassungseinrichtungen (13a) des Endgeräts (1) erfassten Daten, die Erfassung des Infrarotbilds ausgehend von von zweiten optischen Erfassungseinrichtungen (13b) des Endgeräts (1) erfassten Daten und/oder die Erfassung des Tiefenbilds ausgehend von von dritten optischen Erfassungseinrichtungen (13c) des Endgeräts (1) erfassten Daten enthält.

3. Verfahren nach einem der Ansprüche 1 und 2, wobei im Schritt (b) das sichtbare Bild ausgewählt wird, wenn ein Umgebungsbeleuchtungsstärkewert höher ist als eine erste vorbestimmte Schwelle, und/oder das Infrarotbild ausgewählt wird, wenn der Umgebungsbeleuchtungsstärkewert niedriger ist als eine zweite vorbestimmte Schwelle, und/oder das Tiefenbild ausgewählt wird, wenn der Umgebungsbeleuchtungsstärkewert niedriger ist als eine dritte vorbestimmte Schwelle.

4. Verfahren nach Anspruch 3, wobei im Schritt (b) das sichtbare Bild nur ausgewählt wird, wenn ein Umgebungsbeleuchtungsstärkewert höher ist als die erste vorbestimmte Schwelle, das Infrarotbild nur ausgewählt wird, wenn der Umgebungsbeleuchtungsstärkewert niedriger ist als die zweite vorbestimmte Schwelle, und das Tiefenbild nur ausgewählt wird, wenn der Umgebungsbeleuchtungsstärkewert niedriger ist als die dritte vorbestimmte Schwelle.

5. Verfahren nach einem der Ansprüche 3 und 4, wobei die dritte vorbestimmte Umgebungsbeleuchtungsstärkeschwelle im Wesentlichen gleich der zweiten vorbestimmten Umgebungsbeleuchtungsstärkeschwelle ist.

6. Verfahren nach einem der Ansprüche 3 bis 5, wobei die zweite vorbestimmte Umgebungsbeleuchtungsstärkeschwelle und/oder die dritte vorbestimmte Umgebungsbeleuchtungsstärkeschwelle mindestens hundert Mal höher ist (sind) als die erste vorbestimmte Schwelle.

7. Verfahren nach einem der Ansprüche 1 bis 6, wobei der Schritt (d) außerdem die Überprüfung der Authentizität des oder der abhängig vom Tiefenbild erkannten biometrischen Merkmals enthält.

8. Verfahren nach einem der Ansprüche 1 bis 7, wobei das sichtbare Bild, das Infrarotbild und das Tiefenbild im Wesentlichen den gleichen Blickpunkt aufweisen.

9. Verfahren nach einem der Ansprüche 1 bis 8, wobei das biometrische Merkmal der Person unter einem Gesicht und einer Iris der Person ausgewählt wird.

10. Verfahren nach einem der Ansprüche 1 bis 9, wobei der Schritt (e) den Vergleich des erkannten biometrischen Merkmals mit biometrischen Bezugsdaten enthält, die auf Datenspeichereinrichtungen (12) gespeichert sind.

11. Verfahren nach einem der Ansprüche 1 bis 10, wobei der Schritt (e) die Durchführung einer Zugangskontrolle abhängig vom Ergebnis der biometrischen Identifizierung oder Authentifizierung enthält.

12. Endgerät (1), das Datenverarbeitungseinrichtungen (11) enthält, die konfiguriert sind, um zu implementieren:
• (a) den Erhalt eines sichtbaren Bilds, eines Infrarotbilds und eines Tiefenbilds, auf jedem von denen ein biometrisches Merkmal der Person erscheint;
• (b) die Auswahl mindestens eines unter den sichtbaren, Infrarot- und Tiefenbildern abhängig von den Umgebungsbeleuchtungstärkebedingungen;
• (c) die Erkennung des biometrischen Merkmals der Person in jedem ausgewählten Bild;
• (d) die Fusion des oder der erkannten biometrischen Merkmale;
• (e) die Authentifizierung oder die Identifizierung der Person auf der Basis des Ergebnisses der Fusion des oder der erkannten biometrischen Merkmale.

13. Endgerät nach Anspruch 12, das erste optische Erfassungseinrichtungen (13a) für die Erfassung des sichtbaren Bilds und/oder zweite optische Erfassungseinrichtungen (13b) für die Erfassung des Infrarotbilds und/oder dritte optische Erfassungseinrichtungen (13c) für die Erfassung des Tiefenbilds enthält.

14. Computerprogrammprodukt, das Codeanweisungen für die Ausführung eines Verfahrens der Authentifizierung oder Identifizierung einer Person nach einem der Ansprüche 1 bis 11 enthält, wenn das Verfahren auf einem Computer ausgeführt wird.

15. Computerlesbare Speichereinrichtung, auf der ein Computerprogrammprodukt Codeanweisungen für die Ausführung eines Verfahrens der Authentifizierung oder Identifizierung einer Person nach einem der Ansprüche 1 bis 11 enthält.

## Claims

1. Method for authenticating or identifying an individual, **characterised in that** it comprises the implementation by data processing means (11) of a terminal (1) of the following steps:
(a) Obtaining a visible image, an infrared image, and a depth image on each of which a biometric trait of said individual appears;
(b) Selecting at least one of said visible, infrared and depth images as a function of the ambient lighting conditions;
(c) Detecting said biometric trait of the individual in each selected image;
(d) Merging the detected biometric trait or traits;
(e) Authenticating or identifying said individual on the basis of the result of the merging of the detected biometric trait or traits.

2. Method according to Claim 1, wherein the step (a) comprises the acquisition of said visible image from data acquired by first optical acquisition means (13a) of the terminal (1), the acquisition of said infrared image from data acquired by second optical acquisition means (13b) of the terminal (1) and/or the acquisition of said depth image from data acquired by third optical acquisition means (13c) of the terminal (1).

3. Method according to one of Claims 1 and 2, wherein, in the step (b), the visible image is selected if an ambient light lighting value is greater than a first predetermined threshold, and/or the infrared image is selected if the ambient light lighting value is less than a second predetermined threshold, and/or the depth image is selected if the ambient light lighting value is less than a third predetermined threshold.

4. Method according to Claim 3, wherein, in the step (b), the visible image is selected only if an ambient light lighting value is greater than the first predetermined threshold, the infrared image is selected only if the ambient light lighting value is less than the second predetermined threshold, and the depth image is selected only if the ambient light lighting value is less than the third predetermined threshold.

5. Method according to one of Claims 3 and 4, wherein the third predetermined ambient light lighting threshold is substantially equal to the second predetermined ambient light lighting threshold.

6. Method according to one of Claims 3 to 5, wherein said second predetermined ambient light lighting threshold and/or said third predetermined ambient light lighting threshold is or are at least one hundred times greater than the first predetermined threshold.

7. Method according to one of Claims 1 to 6, wherein the step (d) further comprises the verification of the authenticity of the detected biometric trait or traits as a function of the depth image.

8. Method according to one of Claims 1 to 7, wherein the visible image, the infrared image and the depth image have substantially the same point of view.

9. Method according to one of Claims 1 to 8, wherein said biometric trait of the individual is chosen from among a face and an iris of the individual.

10. Method according to one of Claims 1 to 9, wherein the step (e) comprises the comparison of the detected biometric trait with reference biometric data stored on data storage means (12).

11. Method according to one of Claims 1 to 10, wherein the step (e) comprises the implementation of an access control as a function of the result of said biometric identification or authentication.

12. Terminal (1) comprising data processing means (11) configured to implement:
• (a) The obtaining of a visible image, of an infrared image and of a depth image on each of which a biometric trait of said individual appears;
• (b) The selection of at least one of said visible, infrared and depth images as a function of the ambient lighting conditions;
• (c) The detection of said biometric trait of the individual in each selected image;
• (d) The merging of the detected biometric trait or traits;
• (e) The authentication or the identification of said individual on the basis of the result of the merging of the detected biometric trait or traits.

13. Terminal according to Claim 12, comprising first optical acquisition means (13a) for the acquisition of said visible image and/or second optical acquisition means (13b) for the acquisition of said infrared image and/or third optical acquisition means (13c) for the acquisition of said depth image.

14. Computer program product comprising code instructions for the execution of a method according to one of Claims 1 to 11 for authenticating or identifying an individual, when said method is executed on a computer.

15. Storage means that can be read by computing equipment on which a computer program product comprises code instructions for the execution of a method according to one of Claims 1 to 11 for authenticating or identifying an individual.
